# EUROPEAN PATENT SPECIFICATION

(11) **EP 2 986 457 B1**
(45) Date of publication and mention of the grant of the patent: **30.05.2018**
(21) Application number: 14721007.4
(22) Date of filing: 01.04.2014
(51) Int. Cl.: B60B 11/02

(54) **COUPLING OF DRIVING TWIN WHEELS FOR A DRIVE AXLE OF A VEHICLE**
KUPPLUNG VON ZWILLINGSANTRIEBSRÄDERN FÜR EINE ANTRIEBSACHSE EINES FAHRZEUGS
COUPLAGE DE ROUES JUMELÉES MOTRICES POUR UN ESSIEU MOTEUR D'UN VÉHICULE

(30) Priority: 17.04.2013 IT MO20130099
(43) Date of publication of application: 24.02.2016
(73) Proprietor: OMCI S.p.A., 41013 Castelfranco Emilia (MO) (IT)
(72) Inventor: MAGNI, Giorgio, 41121 Modena (IT)
(74) Representative: Gianelli, Luca
(86) International application number: PCT/IB2014/000464
(87) International publication number: WO 2014/170728

(56) References cited:
- EP-A2- 1 145 894
- DE-A1-102011 078 132
- US-A- 2 132 029

## Description

The present invention relates to a coupling of driving twin wheels for a drive axle of a vehicle. Specifically, but not exclusively, this coupling finds a useful application in vehicles used as means of lifting and moving materials, such as for example: reach-staker for containers, forklifts, machinery for mining, vehicles used in harbors, etc,

This involves self-propelled vehicles, designed to handle considerably heavy loads and intended to turn and maneuver in tight spaces. For these self-propelled vehicles the use of drive axles equipped with pairs of twin wheels is common. The choice of mounting twin wheels, fixed relative to one another, has the drawback of causing significant wear of the tires and a high consumption of fuel, due actually to the difficulty of turning in cramped spaces (in fact, in this situation, the different speeds of the twin wheels cause considerable sliding on the ground).

Attempts to solve the problem included installing a traditional differential between the two twinned wheels, to free the two wheels relative to one another, while the drive torque was transmitted to the body of the differential.

With this solution, the drive torque is distributed to the two wheels, but if one of the two wheels loses grip, the braking and traction capabilities of the vehicle decrease, because a differential lock between the wheels is not provided. Moreover, the mechanism is complicated and cumbersome.

According to a second solution, mechanically simpler and also more dated than the previous one, one of the two wheels is kept idling and only the other one is driven. An example of this type is described in the prior art document US6419325. The solution proposed therein has the same drawbacks of the previously illustrated one, with a further burden, however, that traction and braking of the vehicle act only and always on one of the two wheels.

According to a further, more improved solution, one wheel is always driven and the other wheel is selectively locked to the first one by means of a clutch, which is controlled from the outside. This case is described in document US6527073. However, this is a solution that, as is apparent from the prior art proposed, requires at least very complicated and expensive implementations.

DE102011078132 discloses a coupling of driving wheels for a drive axle of a vehicle in which, there is included a fixed spindle, constrained to the supporting structure of the axle, on which a rotating element is rotatable coupled with a coaxial arrangement, with a rim of the first of said wheels firmly joined to the spindle, wherein the rim of the second of said driving twin wheels is firmly and coaxially joined to an element, which is retained with respect to the rotating element, through thrust bearings and is in turn rotationally coupled through a radial bearing, to an outer surface integral to the rotating element. The main object of the present invention is to obviate the drawbacks and shortcomings of the prior art, by means of a coupling of the driving twin wheels of the drive axle of a vehicle as hereinafter described and claimed.

In particular, intends to implement a solution characterized by a remarkable constructive simplicity and which may be used with all types of wheel and load conditions ensuring safety in braking and traction.

An advantage of this invention is to be so structured as to allow locking or unlocking of the twin wheels in automatic or manual way depending on the need.

Further features and advantages of this invention will result more evident from the following detailed description of a preferred, but not exclusive embodiment, illustrated by way of not limiting example, in the enclosed drawing, in which:

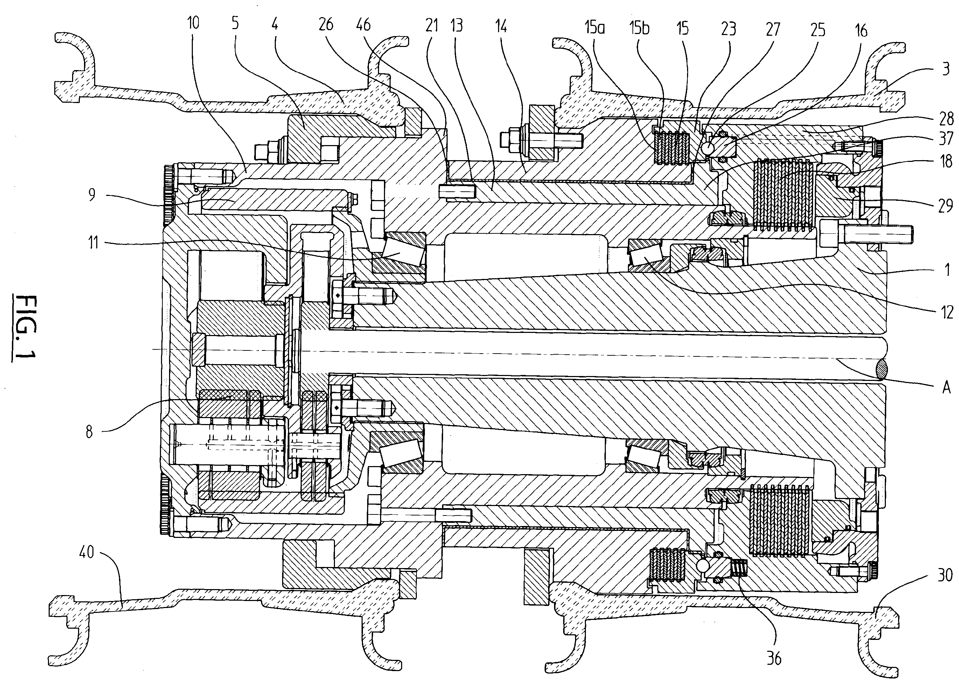

- Figure 1 shows partially a cross-sectional view taken along a plane including the rotation axis of the twin wheels.

With reference to the above mentioned Figures, 1 denotes a fixed spindle, that is bound to the supporting structure of a drive axle of a vehicle. Such type of drive axle is the main application in vehicles used as means of lifting and moving materials, such as, for example: reach-staker for containers, heavy forklifts, machinery for mining, vehicles used in harbors, etc. Just to cope with the large loads that these vehicles are intended to maneuver the vehicles themselves are provided with drive axles with twin wheels.

Motion is transmitted by a shaft A, coaxial with the rotation axis of the wheels, to a planetary gear 8, which drives the fixed ring gear 9 driving a rotating element 10 in rotation.

The rotating element 10 is rotatably coupled, by means of bearings 11 and 12, to the spindle 1, and is coaxial with the rotation axis A, that transmits the rotational motion to the same rotating element 10 with the interposition of the planetary gear 8. The rim 4 of the first wheel 40 of said twin wheels, the outer one that is located externally with respect to the axle, is rigidly coupled to the rotating element 10. The second twin wheel, indicated by 30, that is the inner one of the two, closer to the center of the axle, has a rim 3 which is integrally and coaxially constrained to an element 14. The latter is free to rotate with respect to the rotating element 10, it being rotationally coupled, via a radial bearing 21, to an outer surface integral with the rotating element 10. The element 14 is also retained axially in both directions, with respect to the rotating element 10, by means of axial thrust bearings 26 and 27.

In particular, the outer surface integral with the rotating element 10, on which the rotating element 14 is rotationally coupled by means of the bearing 21, of the sliding type, is made on a tubular body 13, which is coaxially joined to the rotating element 10 and is provided with a radially protruding projection 37 which forms the outer ring of the axial bearing 27.

With this arrangement, the rim 3 of the inner wheel is rigidly bound, but in a removable manner, to the element 14.

A radially projecting portion of the annular surface 46 is provided on the rotating element 10 to form the outer ring of the axial bearing 26.

Braking means 15 operate between the element 14 and a fixed annular element 14, that is integral with the spindle 1 and is provided with a coaxially movable annular piston 16, acting, through the interposition of a axial bearing 25, for instance a ball bearing, against a movable annular element 23, to activate the same braking means.

The braking means 15 include a multiple disc brake, in which the discs, respectively indicated with 15b, 15a, are arranged side by side and alternately bound, so as to rotate therewith, to the element 14 along the smaller diameter, and to the movable annular element 23 along the larger diameter, this latter element being provided for this purpose with a bell-shaped portion designed for accommodating the connection with the outer portions of the discs 15a integral for rotation with the same movable annular element 23.

The braking means 15 operate between the tubular body 13, which is rigidly coupled to the rotating element 10, and element 14. All said elements have the ability to rotate around the common rotation axis A. Through the braking means 15 is thus possible to prevent or allow, based on request and/or the need, the relative rotation between the rotating element 10 and the element 14.

The coaxially movable annular piston 16 is pushed, with a predetermined axial load, against the movable annular element 23. The movable annular element 23 is constrained, not to rotate with respect thereto, in a sliding manner to the tubular body 13 by means of a splined coupling with grooved profiles.

In particular, this can be operated hydraulically, so as to perform a braking action capable of stopping the inner twin wheel with respect to the outer one, effectively and operatively predetermined up to reaching a predetermined difference in the torque between the two twin wheels. Slipping between the stacks of discs 15a and 15b will start beyond this difference. This fact allows a relative rotation between the tubular body 13, rigidly coupled to the rotating element 10, and the element 14, that is between the two twin wheels. Because of the arrangement of the various components, the hydraulic drive can be easily implemented thus making it possible to realize an easy command from the outside of the annular piston 16 that allows to carry out the braking action as described also by varying the thrust on the disc packs 15a and 15b and, as a consequence, to vary the limit value of stress, above which relative rotation between the wheels is allowed.

Creation of the predetermined axial load with which the movable annular piston 16 acts upon the braking means 15, can be achieved by spring means, such as springs 36 which press the same annular piston against the movable annular element 23.

In practice, a limit is set below which the two twin wheels are kept rigidly connected. On exceeding this limit a shift will start that allows a relative rotation. So, in normal straight motion of the vehicle both twin wheels are rigidly linked and therefore able to operate with maximum traction and maximum braking capacity, because the braking means are activated performing a locking action on the inner twin wheel. The joined condition starts "automatically" to be released only when the stress caused by the sliding of the inner wheel with respect to the outer reaches and exceeds a predetermined value that corresponds to a predetermined value of the axial load exerted by the annular piston 16 on the discs of the braking means 15.

The coupling is also equipped with a large capacity braking device that serves the purpose of stopping or decelerating the vehicle. This device consists of two series of discs 18, bound alternately to the rotating element 10 and to the fixed annular element 28, so as to allow axial movement of the same; by activation of an annular piston 29, the discs are forced against each other in order to generate the desired friction braking torque regardless of the existing block or release rotation situation of the twin wheels. This braking device is equipped with forced oil cooling to dissipate the thermal energy produced by braking. The brake chamber is separated from the rest of the axle by means of seals.

## Claims

1. A coupling of driving twin wheels for a drive axle of a vehicle in which there is included a fixed spindle (1), constrained to the supporting structure of the axle, on which a rotating element (10) is rotatably coupled with a coaxial arrangement, with a rim (4) of the first of said twin wheels firmly joined to the spindle, **characterized in that** the rim (3) of the second of said driving twin wheels is firmly and coaxially joined to an element (14), which is retained axially in both directions, with respect to the rotating element (10), through thrust bearings (26, 27) and is in turn rotationally coupled, through a radial bearing (21), to an outer surface integral to the rotating element (10); braking means (15) being provided which operate between the said element (14) and a fixed annular element (28), that is integral with the spindle (1) and is provided with a coaxially movable annular piston (16) which acts, through the interposition of an axial bearing (25), against a movable annular element (23) to activate said braking means; said coaxially movable annular piston (16) being pushed, with a predetermined axial load, against the said movable annular element (23) which is constrained in axially sliding manner, not to rotate with respect thereto, to a tubular body (13) which, in turn, is made integral to the rotating element (10).

2. A coupling of driving twin wheels for a drive axle according to claim 1, **characterized in that** said braking means include a multiple disc brake n which the disks are arranged side by side and alternately bound, so as to rotate therewith, to the element (14) along the smaller diameter, and to the movable annular element (23) along the larger diameter, this latter element being provided for this purpose with a bell-shaped portion designed for accommodating the connection with the outer portions of the disks integral for rotation with the same movable annular element (23).

3. A coupling of driving twin wheels for a drive axle according to claim 2, **characterized in that** spring means which push said coaxially movable annular piston (16) with a predetermined axial load, against the said movable annular element (23) include springs (36).

4. A coupling of driving twin wheels for a drive axle according to claim 3, **characterized in that** said outer surface integral to the rotating element (10) on which the rotating element (14) is rotationally coupled by means of the bearing (21), is made on a tubular body (13) which is coaxially joined to the rotating element (10) and is provided with a radially protruding projection (37) which forms the outer ring of the axial bearing (27); with a radially projecting portion of the annular surface (46) being provided on the rotating element (10) to form the outer ring of the axial bearing (26).

5. A coupling of driving twin wheels for a drive axle according to claim 3, **characterized in that** said first of said twin wheels is the outer wheel.

## Patentansprüche

1. Kupplung von Zwillingsantriebsrädern für eine Antriebsachse eines Fahrzeugs in dem eine feste Spindel (1) enthalten ist, wobei die Spindel an die Tragwerk der Achse gebunden ist, auf der ein Drehelement (10) drehbar mit einer koaxialen Anordnung gekoppelt ist, mit einer Felge (4) des ersten der Zwillingsräder die fest mit der Spindel verbunden ist, **dadurch gekennzeichnet, dass** der Rand (3) des zweiten der Antriebszwillingsräder fest und koaxial mit einem Element (14) verbunden ist, das axial in beiden Richtungen in Bezug auf das Drehelement (10) durch Axiallager (26) (27) gehalten wird und das wiederum über ein Radiallager (21) mit einer Außenfläche, die mit dem Drehelement (10) fest verbunden ist, drehgekoppelt ist; wobei Bremsmittel (15) vorgesehen sind, die zwischen dem Element (14) und einem feststehenden ringförmigen Element (28) arbeiten, das einstückig mit der Spindel (1) ist und mit einem koaxial beweglichen Ringkolben (16) versehen ist. der unter Zwischenschaltung eines Axiallagers (25) gegen ein bewegliches ringförmiges Element (23) wirkt um die Bremsmittel zu aktivieren; wobei der koaxial bewegliche Ringkolben (16) mit einer vorbestimmten axialen Belastung gegen das bewegliche ringförmige Element (23) gedrückt wird, das axial gleitend gehalten wird, so dass es sich nicht in Bezug auf einen rohrförmigen Körper drehen kann, der wiederum einstückig mit dem Drehelement (10) ausgebildet ist.

2. Kupplung von Zwillingsantriebsrädern für eine Antriebsachse nach Anspruch 1, **dadurch gekennzeichnet, dass** die Bremsmittel umfassen eine Mehrfachscheibenbremse, bei der die Scheiben nebeneinander angeordnet sind und abwechselnd an das Element (14) und entlang des kleineren Durchmessers verbunden sind, um sich damit zu drehen, wobei die Scheiben auch entlang des größeren Durchmessers an das bewegliche ringförmige Element (23) gebunden, dieses letztere Element ist zu diesem Zweck mit einem glockenförmigen Abschnitt versehen der zur Aufnahme der Verbindung der Scheiben mit den äußeren Abschnitten ausgelegt ist, so dass die mit demselben beweglichen ringförmigen Element (23) fest verbunden rotieren.

3. Kupplung von Zwillingsantriebsrädern für eine Antriebsachse nach Anspruch 2, **dadurch gekennzeichnet, dass** die Federmittel, die den koaxial bewegbaren ringförmigen Kolben (16) mit einer vorbestimmten axialen Belastung gegen das bewegliche ringförmige Element (23) drücken, Federn (36) umfassen.

4. Kupplung von Zwillingsantriebsrädern für eine Antriebsachse nach Anspruch 3, **dadurch gekennzeichnet, dass** die äußere Oberfläche, die integral mit dem Drehelement (10) ist, auf der das Drehelement (14) mittels des Lagers (21) drehgekoppelt ist, an einem rohrförmigen Körper (13) hergestellt ist, der koaxial mit dem Drehelement (10) verbunden ist und der mit einem radial vorstehenden Vorsprung (37) vorgesehen ist, der den Außenring des Axiallagers (27) bildet; wobei ein radial vorstehender Abschnitt der Ringfläche (46) an dem Drehelement (10) vorgesehen ist um den äußeren Ring des Axiallagers (26) zu bilden.

5. Kupplung von Zwillingsantriebsrädern für eine Antriebsachse nach Anspruch 3, **dadurch gekennzeichnet, dass** das erste der Zwillingsräder das äußere Rad ist.

## Revendications

1. Un couplage de roues jumelées motrices pour un essieu moteur d'un véhicule dans lequel est incluse une fusée fixe (1), contraint à la structure de support de l'essieu, sur lequel un élément rotatif (10) est couplé de manière rotative par un rapport coaxial, avec une jante (4) de la première desdites roues jumelées solidaire de la fusée, **caractérisé en ce que** la jante (3) de la deuxième des roues jumelées motrices est solidaire et coaxialement reliés avec un élément (14), qui est retenu axialement dans les deux sens, par rapport à l'élément rotatif (10), à travers des roulements de poussée (26) (27) et qui est lui-même couplé en rotation, à travers un roulement radial (21), à une surface externe solidaire de l'élément rotatif (10); des moyens de freinage (15) étant prévus qui agissent entre ledit élément (14) et un élément annulaire fixe (28), qu'il est solidaire de la fusée (1) et est muni d'un piston annulaire mobile coaxialement (16) qui agit, grâce à l'interposition d'un roulement axial (25), contre un élément annulaire mobile (23) pour activer lesdits moyens de freinage; ledit piston annulaire mobile coaxialement (16) est poussé, avec une charge axiale prédéterminée, contre l'élément annulaire mobile (23) qui est contraint en glissement axial, de sorte que l'élément annulaire ne peut pas tourner par rapport à un corps tubulaire (13), qui, à son tour, est intégré à l'élément rotatif (10).

2. Un couplage de roues jumelées motrices pour un essieu moteur selon la revendication 1, **caractérisé en ce que** lesdites moyens de freinage comprennent un frein à disques multiples dans lequel les disques sont disposés côte à côte et alternativement liés a l'élément (14) le long du plus petit diamètre, de manière à tourner avec ceux-ci, et à l'élément annulaire mobile (23) le long du plus grand diamètre, ce dernier élément étant prévu à cet effet avec une partie en forme de cloche conçue pour recevoir la connexion avec les parties extérieures des disques qui sont solidaires de la rotation avec le même élément annulaire mobile (23).

3. Un couplage de roues jumelées motrices pour un essieu moteur selon la revendication 2, **caractérisé en ce que** des moyens de ressort qui poussent ledit piston annulaire mobile coaxialement (16) avec une charge axiale prédéterminée, contre lesdits éléments annulaires mobiles (23) comprennent des ressorts (36).

4. Un couplage de roues jumelées motrices pour un essieu moteur selon la revendication 3, **caractérisé en ce que** la surface externe solidaire de l'élément rotatif (10) sur laquelle est couplé en rotation l'élément rotatif (14) au moyen du palier (21), est réalisée sur un corps tubulaire (13) qu'il est coaxialement à l'élément rotatif (10) et est muni d'une saillie radiale (37) qui forme la bague extérieure du roulement axial (27); une partie faisant saillie radialement de la surface annulaire (46) étant prévue sur l'élément rotatif (10) pour former la bague extérieure du roulement axial (26).

5. Un couplage de roues jumelées motrices pour un essieu moteur selon la revendication 3, **caractérisé en ce que** la première desdites roues jumelées est la roue extérieure.
